# EUROPÄISCHE PATENTSCHRIFT

(11) **EP 2 444 720 B1**
(45) Veröffentlichungstag und Bekanntmachung des Hinweises auf die Patenterteilung: **26.03.2014**
(21) Anmeldenummer: 11185653.0
(22) Anmeldetag: 18.10.2011
(51) Int. Cl.: F21S 8/10, F21V 5/00, F21V 5/04, F21V 7/00, G02B 6/00, F21V 8/00

(54) **Beleuchtungseinrichtung für ein Kraftfahrzeug**
Lighting device for a motor vehicle
Dispositif d'éclairage pour un véhicule automobile

(30) Priorität: 23.10.2010 DE 102010049422
(43) Veröffentlichungstag der Anmeldung: 25.04.2012
(73) Patentinhaber: Automotive Lighting Reutlingen GmbH, 72762 Reutlingen (DE)
(72) Erfinder: Zwick, Hubert, 70173 Stuttgart (DE)
(74) Vertreter: DREISS Patentanwälte PartG mbB

(56) Entgegenhaltungen:
- WO-A1-2009/001272
- DE-A1-102006 002 324
- JP-A- 2003 090 920
- JP-A- 2008 078 034
- US-A1- 2005 152 153

## Beschreibung

Die vorliegende Erfindung betrifft eine Beleuchtungseinrichtung für ein Kraftfahrzeug. Diese umfasst mindestens eine Lichtquelle zum Aussenden von Licht, einen Lichtleiter aus einem transparenten Material, mindestens ein an einer Oberfläche des Lichtleiters ausgebildetes Einkoppelelement zum Einkoppeln des von der mindestens einen Lichtquelle ausgesandten Lichts in den Lichtleiter, und an einer Oberfläche des Lichtleiters ausgebildete Auskoppelelemente zum Auskoppeln von Licht aus dem Lichtleiter.

Eine solche Beleuchtungseinrichtung ist bspw. aus der DE 10 2008 016 764 A1 bekannt. Bei der dort offenbarten Beleuchtungseinrichtung erfolgt eine Bündelung des Lichts durch den Lichtleiter nur in einer Ebene, die den Lichtleiter in Längsrichtung schneidet, was der Zeichenebene in den Fig. 2 bis 5 und 7 bis 9 der Druckschrift entspricht. Quer dazu ist eine Bündelung aufgrund des scheinbar chaotischen Verlaufs der Lichtstrahlen in der Ebene quer zur Längsrichtung des Lichtleiters nicht möglich. Das bedeutet, dass das Licht quer zur Ebene der Längsrichtung über einen für die jeweils realisierte Leuchtenfunktion gesetzlich vorgegebenen Bereich hinaus gestreut und somit verschwendet wird. Der Lichtleiter hat somit eine geringe Effizienz und die bekannte Beleuchtungseinrichtung einen relativ schlechten Wirkungsgrad. Außerdem müssen zusätzliche Reflexionsflächen vorgesehen werden, um das ausgekoppelte Licht zumindest näherungsweise in eine gewünschte Richtung zu lenken, was mit einem zusätzlichen Aufwand für den Entwurf der Beleuchtungseinrichtung und zusätzlichen Kosten für deren Herstellung verbunden ist. Zudem bestehen nur sehr eingeschränkte Möglichkeiten, die Form und Ausgestaltung der Reflexionsflächen zu variieren. Entsprechendes gilt auch für die in der nachveröffentlichten DE 10 2009 052 339 beschriebene Beleuchtungseinrichtung.

Eine gattungsgemäß Beleuchtungseinrichtung ist aus WO 2009/001272 bekannt.

Ausgehend von dem beschriebenen Stand der Technik liegt der vorliegenden Erfindung die Aufgabe zugrunde, das von einer Lichtquelle ausgesandte Licht mit hoher Effizienz zu bündeln und den Wirkungsgrad der Beleuchtungseinrichtung zu verbessern. Gleichzeitig soll die Flexibilität in der Form und Ausgestaltung der Beleuchtungseinrichtung erhöht sowie die Kosten für deren Herstellung verringert werden.

Zur Lösung dieser Aufgabe wird ausgehend von der Beleuchtungseinrichtung der eingangs genannten Art eine Beleuchtungseinrichtung nach Anspruch 1 vorgeschlagen.

Der Lichtleiter kann aus beliebigem transparentem Material gebildet sein. Bevorzugt ist jedoch ein Kunststoffmaterial, insbesondere Polymethylmethacrylat (PMMA), aus dem der Lichtleiter einfach mittels Spritzgießen in großen Stückzahlen kostengünstig hergestellt werden kann. Vorzugsweise ist der Lichtleiter zusammen mit den Einkoppelelementen und den Auskoppelelementen als ein einziges, beispielsweise mittels Spritzgießen hergestelltes, Bauteil ausgebildet. Durch die rotationssymmetrische Kegelform des Lichtleiters und die Struktur auf der Innenfläche des Hohlkegels wird eine hochgradig geordnete Lichtausbreitung in verschiedenen Ebenen im Lichtleiter erreicht.

Hierbei ist besonders bevorzugt, dass eine abgeplattete Spitze des Hohlkegels ein Einkoppelelement des Lichtleiters bildet. Vor dem Einkoppelelement ist mindestens eine Lichtquelle angeordnet, die Licht auf das Einkoppelelement aussendet. Zur Verbesserung des Wirkungsgrads können der Lichtquelle Mittel zum Bündeln und/oder Brechen des durch diese ausgesandten Lichts zugeordnet sein, so dass ein möglichst großer Anteil des ausgesandten Lichts auf die Einkoppelfläche trifft. Als Lichtquelle wird vorzugsweise eine einzelne oder eine Gruppe mehrerer Halbleiterlichtquellen, insbesondere Leuchtdioden (LEDs), eingesetzt.

Die erfindungsgemäße Beleuchtungseinrichtung ist vorzugsweise als eine Kraftfahrzeugleuchte ausgebildet. Sie kann beliebige Leuchtenfunktionen erzeugen, insbesondere Tagfahrlicht, Begrenzungs-, Positions- oder Standlicht, Blinklicht, Nebellicht, Bremslicht, Rückfahrlicht oder ähnliches, erzeugen.

Weitere Merkmale und Vorteile der Erfindung werden nachfolgend anhand der Figuren näher erläutert. Dabei bilden sämtliche angegebenen Merkmale sowohl für sich alleine als auch in beliebiger Kombination mit anderen Merkmalen den Gegenstand der vorliegenden Erfindung. Es zeigen:
- Fig. 1: eine Ansicht in einen als Hohlkegel ausgebildeten Lichtleiter einer erfindungsgemäßen Beleuchtungseinrichtung gemäß einer bevorzugten Ausführungsform entgegen einer Lichtaustrittsrichtung;
- Fig. 2: eine Ansicht in einen als Hohlkegel ausgebildeten Lichtleiter einer erfindungsgemäßen Beleuchtungseinrichtung gemäß einer anderen bevorzugten Ausführungsform entgegen einer Lichtaustrittsrichtung;
- Fig. 3: eine Schnittansicht entlang einer Kegelachse des Lichtleiters aus Fig. 1;
- Fig. 4: einen vergrößerten Ausschnitt aus Fig. 3 mit beispielhaft eingezeichneten Strahlverläufen; und
- Fig. 5: die Ansicht des Lichtleiters aus Figur 3 mit beispielhaft eingezeichneten Strahlverläufen.

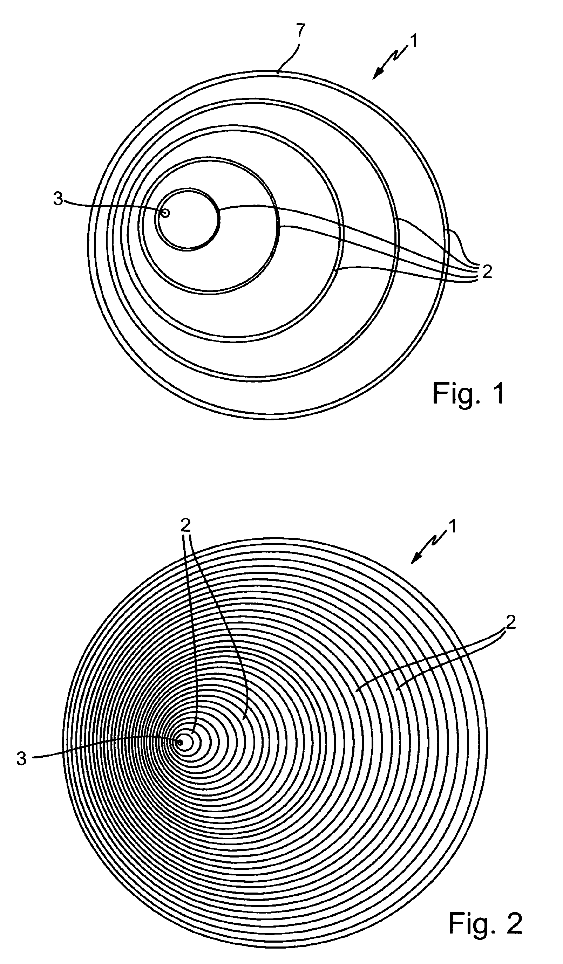

In Figur 1 ist ein Lichtleiter in der Form eines Hohlkegels in seiner Gesamtheit mit dem Bezugszeichen 1 bezeichnet. Der Lichtleiter ist Bestandteil einer Beleuchtungseinrichtung für ein Kraftfahrzeug. Die Beleuchtungseinrichtung dient vorzugsweise zur Realisierung einer beliebigen Leuchtenfunktion, bspw. eines Tagfahrlichts, Begrenzungs-, Positions- oder Standlichts, Blinklichts, Nebellichts, Bremslichts oder Rückfahrlichts. Die Beleuchtungseinrichtung umfasst ein Gehäuse (nicht dargestellt), das vorzugsweise aus Kunststoff gefertigt ist. In dem Gehäuse ist der hohlkegelförmige Lichtleiter 1 angeordnet. Es ist denkbar, dass außer dem Lichtleiter 1 noch andere Lichtmodule zur Realisierung anderer Leuchtfunktionen oder Scheinwerferfunktionen angeordnet sind.

Figur 1 zeigt eine Ansicht in das Innere des Lichtleiters 1 entgegen einer Lichtaustrittsrichtung. Die Blickrichtung in Figur 1 ist dabei schräg zu einer Kegelachse des Lichtleiters 1. Der Lichtleiter 1 weist an seiner zur Kegelachse hin gerichteten Innenfläche mehrere vorzugsweise rotationssymmetrische stufenförmige Auskoppelelemente 2 auf. Diese erstrecken sich in dem dargestellten Ausführungsbeispiel über den gesamten Innenumfang des Lichtleiters 1. Es ist aber auch denkbar, dass die Auskoppelelemente 2 lediglich mehrere diskrete, über den Innenumfang des Lichtleiters 1 verteilt angeordnete Auskoppelsegmente umfasst.

Eine Spitze des Hohlzylinders 1 bildet eine Einkoppelfläche, über die von einer Lichtquelle 3 ausgesandtes Licht in den Lichtleiter 1 eingekoppelt wird. Die Lichtquelle 3 ist in Figur 1 unterhalb des Lichtleiters 1 angeordnet und deshalb nur gestrichelt eingezeichnet. Das über die Einkoppelfläche eingekoppelte Licht wird in dem Lichtleiter mittels Totalreflexion an den Grenzflächen zu der umgebenden Luft reflektiert und über die Auskoppelelemente 2 aus dem Lichtleiter 1 ausgekoppelt, falls die Lichtstrahlen steil genug auf die Auskoppelelemente 2 treffen.

Bei dem Ausführungsbeispiel aus Figur 1 sind insgesamt fünf ringförmige Auskoppelelemente 2 über den gesamten Umfang der Innenfläche des Lichtleiters 1 angeordnet. Die Auskoppelelemente 2 weisen im Wesentlichen den gleichen Abstand zueinander auf. Bei einem anderen Ausführungsbeispiel, wie es bspw. in Figur 2 dargestellt ist, sind am Innenumfang des hohlkegelförmigen Lichtleiters 1 eine größere Zahl an Auskoppelelementen 2 ausgebildet. Diese weisen einen geringeren Abstand zueinander auf als die Auskoppelelemente 2 des Ausführungsbeispiels aus Figur 1. Auch hier erstrecken sich die Auskoppelelemente 2 jedoch über den gesamten Innenumfang und sind im Wesentlichen äquidistant zueinander angeordnet. Selbstverständlich wäre es denkbar, den Abstand zwischen den einzelnen Auskoppelelementen 2 beliebig zu variieren. Auch die Größe, insbesondere die Tiefe der Auskoppelelemente 2 kann beliebig variiert werden, um eine gewünschte Lichtverteilung bzw. Leuchtenfunktion realisieren zu können.

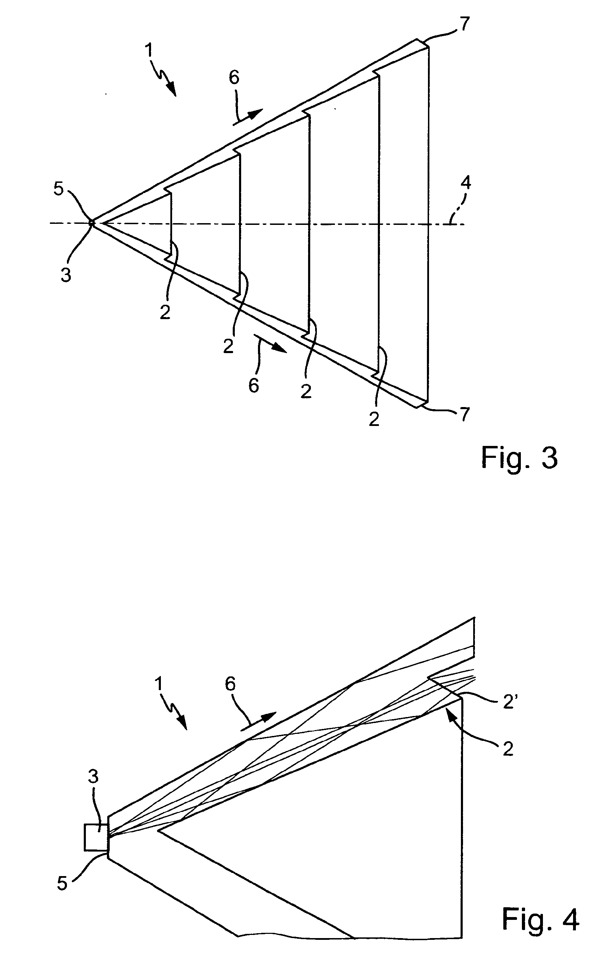

Figur 3 zeigt eine Schnittansicht entlang der Kegel- oder Rotationsachse 4 des Lichtleiters aus Fig. 1. die abgeflachte Spitze des Hohlkegels 1 bildet die Lichteinkoppelfläche 5. Die Lichtquelle 3 ist vor der Einkoppelfläche 5 angeordnet. Ein Teil des von der Lichtquelle 3 ausgesandtes Licht gelangt auf die Einkoppelfläche 5 und wird in den Lichtleiter 1 eingekoppelt. Das eingekoppelte Licht breitet sich im Wesentlichen in einer Richtung 6 entlang des Lichtleiters 1 in Richtung eines vorderen Rands 7 des Lichtleiters 1 aus. Wenn das Licht in einem geeigneten Winkelbereich auf die Auskoppelelemente 2 trifft, wird es über diese aus dem Lichtleiter 1 ausgekoppelt. Gleichzeitig wird das ausgekoppelte Licht aufgrund des Übergangs von dem Material des Lichtleiters 1 in die Luft gebrochen.

In dem Querschnitt der Figur 3 ist die in Richtung der Lichtausbreitung 6 variierende (größer werdende) Materialstärke des Lichtleiters 1 deutlich zu erkennen. Ausgehend von der Einkoppelfläche 5 bzw. eines Auskoppelelements 2 mit geringer Wandstärke (Anfangsdicke) nimmt die Stärke bis zum in Lichtausbreitungsrichtung 6 nachfolgenden Auskoppelelement 2 zu. Eine Auskoppelfläche 2' (vgl. Figur 4) eines jeden stufenförmigen Auskoppelelements 2 führt die Materialstärke im Bereich der Auskoppelelemente 2 wieder zurück auf einen geringeren Wert, vorzugsweise auf die Anfangsdicke. Auf diese Weise wird eine stufenförmige Innenfläche des Lichtleiters 1 realisiert, wobei das Licht jeweils über die stufenartigen Auskoppelflächen 2' der Auskoppelelemente 2 aus dem Lichtleiter 1 ausgekoppelt wird.

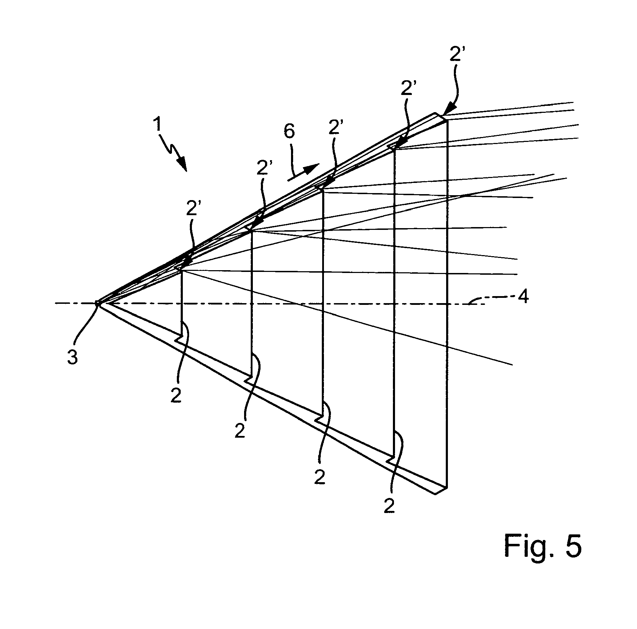

Durch die rotationssymmetrische Kegelform und die Auskoppelstruktur 2 auf der Innenfläche des Lichtleiters 1 wird eine hochgradig geordnete Lichtausbreitung in dem Lichtleiter 1 erreicht. Dies verdeutlichen die Figuren 4 und 5. Figur 4 zeigt einen Strahlverlauf in einer Schnittebene, welche die Kegel- oder Rotationsachse 4 umfasst, in der Nähe der Einkoppelfläche 5. Dabei werden nur die Lichtstrahlen in dem oberen Zweig des Lichtleiters 1 betrachtet. Ein entsprechende Lichtverteilung ergibt sich selbstverständlich auch in dem hier nicht näher betrachteten unteren Zweig des Lichtleiters 1. Da keine besonderen Anforderungen an diese Schnittebene gestellt werden, gelten die folgenden Ausführungen also in allen Ebenen, welche die Rotationsachse 4 enthalten gleichermaßen. Das bedeutet, dass das erfindungsgemäße System zur Vereinfachung komplett zweidimensional abgehandelt werden kann, obwohl es sich bei dem Lichtleiter 1 natürlich um ein dreidimensionales Element handelt.

In den in Figur 4 betrachteten oberen Arm des Lichtleiters 1 gelangt nur Licht, dessen Richtung annähernd der Richtung des oberen Arms entspricht. Dadurch ergibt sich ein erstes Kriterium für die Ordnung der Lichtausbreitung in dem Lichtleiter 1. Licht, das einmal in eine der Schnittebenen des Lichtleiters 1 gelangt ist, bleibt in dieser Ebene, da der Lichtleiter keine nicht-rotationssymmetrischen Flächen aufweist, die das Licht aus dieser Ebene heraus ablenken könnten. Dies ist ein weiteres Kriterium für die Ordnung der Lichtausbreitung in dem Lichtleiter 1. Lichtstrahlen, die nicht parallel zur Lichtleiteroberfläche (Außenseite bzw. Innenseite des Lichtleiters 1) verlaufen, werden aufgrund der zunehmenden Dicke des Lichtleiters 1 und der damit verbundenen Keilform des Lichtleiterarms nach jeder Reflexion immer "paralleler" bis sie irgendwann auf eine der Auskoppelflächen 2' treffen und aus dem Lichtleiter 1 ausgekoppelt werden. Dies ist ein weiteres Kriterium für die Ordnung der Lichtausbreitung in dem Lichtleiter 1.

Die Auskoppelflächen 2' sind in einem bestimmten Anstellwinkel zur übrigen Innenfläche des Lichtleiters 1 ausgerichtet. Der Anstellwinkel ist vorzugsweise so gewählt, dass das austretende Licht aufgrund der damit einhergehenden Brechung in Richtung der Rotationsachse 4 des Lichtleiters 1 gelenkt wird. Dies gelingt umso besser, je weiter von der Lichtquelle 3 entfernt der Lichtaustritt erfolgt, da der Öffnungswinkel im Lichtleiter 1 immer kleiner wird. Der Effekt ist in Figur 5 besonders gut zu erkennen. Der Winkel der ausgekoppelten Lichtstrahlen zur Lichtleiterwand nimmt von der Einkopplung bis zum Kegelende 7 immer weiter ab. Ebenso verhält es sich mit den Bündelöffnungswinkeln der aus dem Lichtleiter 1 ausgetretenen Strahlen, die immer kleiner werden, je weiter weg von der Einkoppelfläche 5 die Lichtstrahlen ausgekoppelt werden. Die in Figur 5 beispielhaft eingezeichneten Lichtstrahlen ergeben sich entlang der gesamten Längserstreckung der Auskoppelelemente 2, das heißt über den gesamten Umfang des kegelförmigen Lichtleiters 1. Das von der Lichtquelle 3 in den Lichtleiter 1 eingekoppelte und über die Auskoppelelemente 2 wieder ausgekoppelte Licht hat also eine relativ zur Längsachse 4 weitgehend rotationssymmetrische Verteilung. Als Lichtquelle 3 wird vorzugsweise eine einzelne oder eine Gruppe mehrerer Halbleiterlichtquellen, insbesondere LEDs, eingesetzt. Diesen können geeignete strahlformenden Optiken, beispielsweise in Form von Reflektoren oder totalreflektierenden Vorsatzoptiken, zugeordnet sein, um einen möglichst großen Teil des von der Lichtquelle ausgesandten Lichts auf die Einkoppelfläche 5 des Lichtleiters 1 zu lenken.

Die erfindungsgemäße Beleuchtungseinrichtung hat den Vorteil, dass eine gute Bündelung der Lichtstrahlen in mehr als nur einer Ebene erzielt werden kann, ohne dass dafür eine zusätzliche Reflektorverspiegelung vorhanden sein muss. Es sind beliebige Beschnitte ähnlich denen eines paraboloiden Reflektors möglich.

Die in der Figuren 4 und 5 gezeigte 2-dimensionale Abhandlung der Strahlverläufe zeigt nur eine von mehreren möglichen Schnittebenen. Selbstverständlich breiten sich die von der Lichtquelle 3 ausgesandten Lichtstrahlen nicht nur in der gezeigten Schnittebene aus, sondern auch schräg dazu, das heißt in die Zeichenebene hinein oder aus dieser heraus. In den Lichtleiter 1 können also auch Strahlen eintreten, die bspw. in Folge der Ausdehnung der Lichtquelle 3 nicht exakt in der gezeigten Ebene verlaufen.

Es gibt verschiedene Möglichkeiten, die Art, Anordnung und Ausgestaltung des Lichtleiters 1 und/oder der Auskoppelelemente 2 zu variieren. Insbesondere können Anzahl, Abstand und Tiefe der Auskoppelflächen 2' variiert werden. Auch die im Längsschnitt betrachtete Form der Auskoppelflächen 2' kann beliebig variiert werden. Insbesondere kann die Form eben oder gewölbt, insbesondere als ein Flächenelement einer Linse, ausgebildet sein. Zudem können einige oder alle der Auskoppelflächen 2' zumindest bereichsweise mit beliebigen Streuoptiken bzw. Streuprofilen versehen sein. Die ringförmigen Auskoppelflächen 2' können statt umlaufend in mehrere Sektoren unterbrochen sein, wobei der Schnitt in jedem Sektor wie der Schnitt aus Figur 3 aussieht, wobei jedoch Anzahl, Abstand und Dicke der Ringe in jedem Sektor unterschiedlich ausgeführt sein kann. In den einzelnen Sektoren kann der Hohlkegel 1 unterschiedlich stark geöffnet sein. Insgesamt kann sich durch die Ausgestaltung der Auskoppelflächen 2' als Sektoren eine schuppig aussehende Innenfläche des hohlkegelförmigen Lichtleiters 1 ergeben. Schließlich sei auch erwähnt, dass auch die Dicke der Lichtleiterarme variiert werden kann.

## Patentansprüche

1. Beleuchtungseinrichtung für ein Kraftfahrzeug, umfassend mindestens eine Lichtquelle (3) zum Aussenden von Licht, einen Lichtleiter (1) aus einem transparenten Material, mindestens ein an einer Oberfläche des Lichtleiters (1) ausgebildetes Einkoppelelement (5) zum Einkoppeln des von der mindestens einen Lichtquelle (3) ausgesandten Lichts in den Lichtleiter (1), und an einer Oberfläche des Lichtleiters (1) ausgebildete Auskoppelelemente (2) zum Auskoppeln von Licht aus dem Lichtleiter (1), wobei der Lichtleiter (1) die Form eines Hohlkegels aufweist, der bezüglich einer Kegelachse (4) rotationssymmetrisch ausgebildet ist, wobei die Auskoppelelemente (2) an einer der Kegelachse (4) zugewandten Innenfläche des Kegels (1) als eine bezüglich der Kegelachse (4) rotationssymmetrische Struktur ausgebildet sind, **dadurch gekennzeichnet, dass** die Auskoppelelemente (2) als auf der Innenfläche des Hohlkegels (1) ausgebildete Auskoppelstufen ausgebildet sind.

2. Beleuchtungseinrichtung nach Anspruch 1, **dadurch gekennzeichnet, dass** eine abgeplattete Spitze des Hohlkegels ein Einkoppelelement (5) des Lichtleiters (1) bildet.

3. Beleuchtungseinrichtung nach Anspruch 1 oder 2, **dadurch gekennzeichnet, dass** ausgehend von einer Spitze des Hohlkegels (1) bis zu einem Rand (7) des Hohlkegels (1) über die Innenfläche des Hohlkegels (1) verteilt mehrere, jeweils zueinander beabstandete kreisförmige Auskoppelstufen auf der Innenfläche ausgebildet sind.

4. Beleuchtungseinrichtung nach Anspruch 3, **dadurch gekennzeichnet, dass** die Wandstärke des Hohlkegels (1) in einer Lichtausbreitungsrichtung (6) innerhalb des Lichtleiters (1) betrachtet jeweils von der Spitze bis zu der ersten Auskoppelstufe (2), von einer Auskoppelstufe (2) zur nachfolgenden Auskoppelstufe (2) und/oder von der letzten Auskoppelstufe (2) bis zum Rand (7) des Hohlkegels (1) zunimmt .

5. Beleuchtungseinrichtung nach Anspruch 4, **dadurch gekennzeichnet, dass** die Auskoppelstufen (2) derart ausgebildet, angeordnet und dimensioniert sind, dass sie die größere Wandstärke in Lichtausbreitungsrichtung (6) innerhalb des Lichtleiters (1) betrachtet vor der Auskoppelstufe (2) auf eine geringere Wandstärke nach der Auskoppelstufe (2) zurückführen.

6. Beleuchtungseinrichtung nach einem der Ansprüche 3 bis 5, **dadurch gekennzeichnet, dass** die Auskoppelstufen (2) in einem durch die Kegelachse (4) verlaufenden Längsschnitt betrachtet jeweils eine Auskoppelfläche (2') aufweisen, wobei die Auskoppelfläche (2') einer bestimmten Auskoppelstufe (2) einen vorgegebenen Anstellwinkel mit der im Bereich der Auskoppelstufe (2) an die Auskoppelfläche (2') grenzenden Innenfläche des Hohlkegels (1) aufspannt, wobei der Anstellwinkel derart gewählt ist, dass durch die Auskoppelfläche (2') ausgekoppeltes Licht unter Berücksichtigung der damit einhergehenden Brechung beim Überging zwischen dem Material des Hohlkegels (1) und der umgebenden Luft in Richtung der Kegelachse (4) gelenkt wird.

7. Beleuchtungseinrichtung nach einem der Ansprüche 3 bis 6, **dadurch gekennzeichnet, dass** die Auskoppelstufen (2) in einem durch die Kegelachse (4) verlaufenden Längsschnitt betrachtet jeweils eine Auskoppelfläche (2') aufweisen, wobei die Auskoppelfläche (2') einer bestimmten Auskoppelstufe (2) in einem durch die Kegelachse (4) verlaufenden Längsschnitt betrachtet einen spitzen Winkel mit der im Bereich der Auskoppelstufe (2) an die Auskoppelfläche (2') grenzenden Innenfläche des Hohlkegels (1) bildet.

8. Beleuchtungseinrichtung nach Anspruch 6 oder 7, **dadurch gekennzeichnet, dass** die Form der Auskoppelflächen (2') in einem durch die Kegelachse (4) verlaufenden Längsschnitt betrachtet einem Flächenelement einer Linse entspricht.

9. Beleuchtungseinrichtung nach einem der Ansprüche 6 bis 8, **dadurch gekennzeichnet, dass** auf den Auskoppelflächen (2') zumindest bereichsweise Streuprofile ausgebildet sind.

10. Beleuchtungseinrichtung nach einem der Ansprüche 6 bis 9, **dadurch gekennzeichnet, dass** die Tiefe der Auskoppelflächen (2') zwischen den einzelnen Auskoppelstufen (2) und/oder zwischen einzelnen Segmenten einer einzigen Auskoppelstufe (2) variiert.

11. Beleuchtungseinrichtung nach einem der Ansprüche 1 bis 10, **dadurch gekennzeichnet, dass** sich die auf der Innenfläche des Hohlkegels (1) ausgebildeten Auskoppelstufen (2) über den gesamten Innenumfang des Hohlkegels (1) erstrecken.

## Claims

1. A lighting device for a motor vehicle, including at least one light source (3) for emitting light, a light guide (1) of a transparent material, at least one incoupling element (5), embodied on one surface of the light guide (1), for coupling the light emitted by the at least one light source (3) into the light guide (1), and outcoupling elements (2) , embodied on one surface of the light guide (1), for coupling light out from the light guide (1), the light guide (1) being in the form of a hollow cone, which is embodied rotationally symmetrically to a cone axis (4), and the outcoupling elements (2) being embodied on an inner surface, facing toward the cone axis (4), of the cone (1) as a structure that is rotationally symmetrical to the cone axis (4), **characterized in that** the outcoupling elements (2) are embodied as outcoupling stages embodied on the inner surface of the hollow cone (1).

2. The lighting device of claim 1, **characterized in that** a flattened tip of the hollow cone forms an incoupling element (5) of the light guide (1).

3. The lighting device of claim 1 or 2, **characterized in that** from a tip of the hollow cone (1) to an edge (7) of the hollow cone (1), a plurality of circular outcoupling stages, spaced apart from one another and distributed over the inner surface of the hollow cone (1), are embodied on the inner surface.

4. The lighting device of claim 3, **characterized in that** the wall thickness of the hollow cone (1), viewed in a light propagation direction (6) inside the light guide (1), increases from the tip to the first outcoupling stage (2), from an outcoupling stage (2) to the next outcoupling stage (2), and/or from the last outcoupling stage (2) to the edge (7) of the hollow cone (1).

5. The lighting device of claim 4, **characterized in that** the outcoupling stages (2) are embodied, disposed and dimensioned such that they return the greater wall thickness upstream of the outcoupling stage (2) to a lesser wall thickness downstream of the outcoupling stage (2), as viewed in the light propagation direction (6) inside the light guide (1).

6. The lighting device of one of claims 3-5, **characterized in that** the outcoupling stages (2), viewed in a longitudinal section extending through the cone axis (4), each have an outcoupling face (2'), and the outcoupling face (2') of a particular outcoupling stage (2) forms a predetermined approach angle with the inside face of the hollow cone (1) bordering on the outcoupling stage (2') in the vicinity of the outcoupling stage (2), and the approach angle is selected such that taking into account the intrinsic diffraction at the transition between the material of the hollow cone (1) and the ambient air, light outcoupled through the outcoupling face (2') is directed in the direction of the cone axis (4).

7. The lighting device of one of claims 3-6, **characterized in that** the outcoupling stages (2), viewed in a longitudinal section extending through the cone axis (4), each have an outcoupling face (2'), and the outcoupling face (2') of a particular outcoupling stage (2), viewed in a longitudinal section extending through the cone axis (4), forms an acute angle with the inside face of the hollow cone (1) bordering on the outcoupling stage (2') in the vicinity of the outcoupling stage (2).

8. The lighting device of claim 6 or 7, **characterized in that** the form of the outcoupling faces (2'), viewed in a longitudinal section extending through the cone axis (4), is equivalent to a surface element of a lens.

9. The lighting device of one of claims 6-8, **characterized in that** scattering profiles are embodied in at least some regions on the outcoupling faces (2').

10. The lighting device of one of claims 6-9, **characterized in that** the depth of the outcoupling faces (2') varies between the individual outcoupling stages (2) and/or between individual segments of a single outcoupling stage (2) .

11. The lighting device of one of claims 1-10, **characterized in that** the outcoupling stages (2) embodied on the inner surface of the hollow cone (1) extend over the entire inner circumference of the hollow cone (1).

## Revendications

1. Dispositif d'éclairage pour un véhicule automobile, comprenant au moins une source de lumière (3) pour émettre de la lumière, un guide de lumière (1) en une matière transparente, au moins un élément d'injection (5) réalisé sur une surface du guide de lumière (1) et destiné à injecter, dans ledit guide de lumière (1), la lumière émise par ladite au moins une source de lumière (3), ainsi que des éléments d'extraction (2) réalisés sur une surface du guide de lumière (1) et destinés à extraire de la lumière du guide de lumière (1), ledit guide de lumière (1) présentant la forme d'un cône creux qui est réalisé à symétrie de révolution par rapport à un axe de cône (4), lesdits éléments d'extraction (2) étant réalisés, sur une surface intérieure du cône (1) qui est tournée vers ledit axe de cône (4), comme une structure qui est à symétrie de révolution par rapport à l'axe de cône (4), **caractérisé par le fait que** lesdits éléments d'extraction (2) sont réalisés en tant que gradins d'extraction formés sur la surface intérieure du cône creux (1).

2. Dispositif d'éclairage selon la revendication 1, **caractérisé par le fait qu'**une pointe aplatie du cône creux forme un élément d'injection (5) du guide de lumière (1).

3. Dispositif d'éclairage selon la revendication 1 ou 2, **caractérisé par le fait que** plusieurs gradins d'extraction circulaires respectivement espacés les uns des autres sont réalisés sur la surface intérieure de manière à être répartis sur ladite surface intérieure du cône creux (1) à partir d'une pointe du cône creux (1) jusqu'à un bord (7) du cône creux (1).

4. Dispositif d'éclairage selon la revendication 3, **caractérisé par le fait que** l'épaisseur de paroi du cône creux (1), vue dans une direction de propagation de lumière (6) à l'intérieur du guide de lumière (1), augmente respectivement depuis la pointe jusqu'au premier gradin d'extraction (2), d'un gradin d'extraction (2) au gradin d'extraction (2) suivant et/ou depuis le dernier gradin d'extraction (2) jusqu'au bord (7) du cône creux (1).

5. Dispositif d'éclairage selon la revendication 4, **caractérisé par le fait que** lesdits gradins d'extraction (2) sont réalisés, agencés et dimensionnés de telle manière qu'ils ramènent l'épaisseur de paroi plus importante, vue dans la direction de propagation de lumière (6) à l'intérieur du guide de lumière (1), en amont du gradin d'extraction (2) à une épaisseur de paroi plus faible en aval du gradin d'extraction (2).

6. Dispositif d'éclairage selon l'une quelconque des revendications 3 à 5, **caractérisé par le fait que**, vus dans une coupe longitudinale passant par l'axe de cône (4), les gradins d'extraction (2) présentent chacun une surface d'extraction (2'), la surface d'extraction (2') d'un gradin d'extraction (2) déterminé définissant un angle d'incidence donné avec la surface intérieure du cône creux (1) qui est contiguë à la surface d'extraction (2') au niveau dudit gradin d'extraction (2), ledit angle d'incidence étant choisi de manière à ce que de la lumière extraite par la surface d'extraction (2') soit dirigée vers ledit axe de cône (4) en considération de la réfraction lors de la transition entre la matière du cône creux (1) et l'air ambiant, qui va de pair avec ceci.

7. Dispositif d'éclairage selon l'une quelconque des revendications 3 à 6, **caractérisé par le fait que**, vus dans une coupe longitudinale passant par l'axe de cône (4), les gradins d'extraction (2) présentent chacun une surface d'extraction (2'), la surface d'extraction (2') d'un gradin d'extraction (2) déterminé formant, vue dans une coupe longitudinale passant par l'axe de cône (4), un angle aigu avec la surface intérieure du cône creux (1) qui est contiguë à la surface d'extraction (2') au niveau dudit gradin d'extraction (2).

8. Dispositif d'éclairage selon la revendication 6 ou 7, **caractérisé par le fait que** la forme des surfaces d'extraction (2'), vue dans une coupe longitudinale passant par l'axe de cône (4), correspond à un élément de surface d'une lentille.

9. Dispositif d'éclairage selon l'une quelconque des revendications 6 à 8, **caractérisé par le fait que** des profils de diffusion sont réalisés au moins par zones sur lesdites surfaces d'extraction (2').

10. Dispositif d'éclairage selon l'une quelconque des revendications 6 à 9, **caractérisé par le fait que** la profondeur des surfaces d'extraction (2') entre les gradins d'extraction (2) individuels et/ou entre des segments individuels d'un seul gradin d'extraction (2) varie.

11. Dispositif d'éclairage selon l'une quelconque des revendications 1 à 10, **caractérisé par le fait que** les gradins d'extraction (2) réalisés sur la surface intérieure du cône creux (1) s'étendent sur toute la circonférence intérieure du cône creux (1).
